# EUROPEAN PATENT APPLICATION

(11) **EP 4 773 486 A1**
(43) Date of publication of application: **08.07.2026**
(21) Application number: 23951834.3
(22) Date of filing: 14.09.2023
(51) Int. Cl.: H02K 33/00, H02K 41/02, B26B 19/28

(54) **HAIR TRIMMING DEVICE AND LINEAR VIBRATION ELECTRIC MOTOR THEREFOR**

(71) Applicant: Shenzhen Ou Yi Zhi Zao Ke Ji Co., Ltd., Shenzhen, Guangdong 518000 (CN)
(72) Inventor: LI, Chao, Shenzhen, Guangdong 518000 (CN)
(74) Representative: De Arpe Tejero, Manuel
(86) International application number: PCT/CN2023/118796
(87) International publication number: WO 2025/054896

(57) **Abstract**

A hair trimming device and a linear vibration electric motor therefor. The linear vibration electric motor comprises: a mounting bracket, a stator for outputting alternating magnetic fields, a first swing member, two rotors, a rotor retainer and a second swing member, wherein the stator is arranged at the lower portion of the mounting bracket; the rotor retainer is movably connected to the mounting bracket; the rotors are arranged at the bottom of the rotor retainer, the rotors being located above the stator, and the magnetic poles of the two rotors being opposite; and the first swing member and the second swing member are both connected to the rotor retainer, and a spring is provided between the first swing member and the second swing member. The present hair trimming device uses the stator to output alternating magnetic fields, such that the rotors are subjected to a linear reciprocating acting force, so as to perform a linear reciprocating motion via the traction or support of the rotor retainer, enabling the electric motor to directly output a driving force for linear reciprocating motion; the hair trimming device further uses the spring to provide a restoring elastic force for the first swing member and the second swing member and to cause resonance, thereby producing a larger swing amplitude.

## Description

### TECHNICAL FIELD

The present disclosure generally relates to the field of motor technology, and, more particularly, to a hair trimming device and a linear vibration motor therefor.

### BACKGROUND

Currently, in the process of using hair clippers or shavers, the blades used for cutting hair need to move back and forth at a high frequency. This process is accomplished with the help of a motor and a transmission mechanism. The commonly used transmission mechanism typically involves a motor driving an eccentric wheel at high speed. The eccentric wheel is connected to the end of the blade holder, and the rotational motion of the motor is converted into linear motion through the eccentric wheel, thereby driving the blade to move back and forth at a high frequency. However, this process has the following drawbacks.

Since the eccentric wheel and the blade holder need to be in a rotational connection to achieve the above transmission process, there is friction between the eccentric wheel and the blade holder during rotation. During high-frequency rotation, the rotational connection point between the eccentric wheel and the tool holder wears out quickly, leading to frequent replacements and increased costs.

Further, the eccentric wheel driving mechanism needs a larger accommodation space inside the housing of hair clippers, shavers, and other hair removal devices. This results in the end of the hair clipper near the blade needing to be designed with a bulky shape, making the overall size of the hair clipper larger, which conflicts with the current trend of miniaturization in electronic products.

For example, in the Chinese Patent Application No. CN201710061467.0, entitled "ELECTRIC SHAVING DEVICE", a rotational motion of a motor's output shaft is converted into linear reciprocating motion to drive a movable blade to perform linear reciprocating motion, thereby achieving the purpose of shaving hair. However, when the rotational motion is converted into linear reciprocating motion, energy loss occurs during the transmission process. In addition, product reliability may be reduced due to mechanical wear, and its relatively complex structure is not conducive to assembly.

Thus, the related art needs to be further improved and enhanced.

### SUMMARY

In view of the above-mentioned deficiencies of the related art, the purpose of the present disclosure may be to provide a hair trimming device and a linear vibration motor therefor, which may directly output a driving force for linear reciprocating motion, so as to simplify the structure and improve the efficiency.

To solve the above technical problems, the embodiments of the present disclosure may adopt the technical solutions as follows.

A linear vibration motor for a hair trimming device includes a mounting frame, a stator for outputting an alternating magnetic field, a first oscillator, two movers, a mover holder, and a second oscillator. The stator is located in a lower part of the mounting frame, the mover holder is detachably connected to the mounting frame, and the two movers are arranged at a bottom of the mover holder and positioned above the stator. The two movers have opposite magnetic poles. The first oscillator and the second oscillator are both connected to the mover holder, and a spring is provided between the first oscillator and the second oscillator.

In the linear vibration motor for the hair trimming device, the stator includes an iron core and a winding assembly, the winding assembly includes a coil frame and enameled wire, and the enameled wire is wound on the coil frame; the iron core includes two teeth, and the winding assembly is sleeved on the teeth.

In the linear vibration motor for the hair trimming device, the movers include a first mover and a second mover, each including a magnet and a magnetic yoke stacked with the magnet.

In the linear vibration motor for the hair trimming device, the mover holder includes a first mover connector, a second mover connector, a fixation part, and a flexible retain part that are integrally formed; the fixation part is connected to the mounting frame; and the first mover connector and the second mover connector are connected to a first mover and a second mover, respectively.

In the linear vibration motor for the hair trimming device, the flexible retain part includes a thin-walled vertical plate.

In the linear vibration motor for the hair trimming device, the first oscillator is connected to the first mover connector, and the second oscillator is connected to the second mover connector.

In the linear vibration motor for the hair trimming device, the first oscillator includes a swing arm extending from a middle part of the first oscillator; the second oscillator includes two lugs provided at two sides of the second oscillator, respectively, the swing arm being located between the two lugs; and the spring is one of two springs symmetrically arranged with respect to the swing arm, and each connected between the first swing arm and one of the two lugs.

In the linear vibration motor for the hair trimming device, the magnet of the first mover and the magnet of the second mover have opposite magnetic poles.

In the linear vibration motor for the hair trimming device, the iron core is U-shaped, and the winding assembly is one of two winding assemblies each sleeved on one of the two teeth.

A hair trimming device includes a housing, a control component, a movable blade, and the linear vibration motor as described above. The control component and the linear vibration motor are both provided within the housing. The movable blade is connected to the first oscillator and/or the second oscillator of the linear vibration motor.

Compared to the related art, in the hair trimming device and the linear vibration motor therefor provided by the embodiments of the present disclosure, after the linear vibration motor is turned on, the stator outputs an alternating magnetic field, causing the movers to be subjected to a linear reciprocating force under the action of the alternating magnetic field, along with the pulling or supporting action of the mover holder, to generate linear reciprocating motion. Since both the first oscillator and the second oscillator are connected to the mover holder, both the first oscillator and the second oscillator can serve as the motor power output sources. The motor can directly output linear reciprocating driving force, eliminating the mechanism for converting rotational motion into linear motion in the related art, thereby simplifying the structure of the hair trimming device, improving efficiency, and increasing product reliability.

Furthermore, the spring in the present disclosure provides restoring force and generates resonance for the first oscillator and the second oscillator, thereby producing a larger amplitude of oscillation.

### BRIEF DESCRIPTION OF THE DRAWINGS

FIG. 1 is a schematic structural diagram of a linear vibration motor for a hair trimming device from one angle consistent with the present disclosure.
FIG. 2 is a schematic structural diagram of the linear vibration motor for the hair trimming device from another angle consistent with the present disclosure.
FIG. 3 is a schematic exploded structural diagram of the linear vibration motor for the hair trimming device consistent with the present disclosure.

### Reference numerals:

1-Mounting frame; 2-Stator; 21-Iron core; 212-Tooth; 22-Winding assembly; 221-Coil frame; 222-Enameled wire; 3-First oscillator; 31-Swing arm; 4-Mover; 41-First mover; 411-Magnet; 412-Magnetic yoke; 4121-Extension; 42-Second mover; 5-Mover holder; 51-First mover connector; 52-Second mover connector; 53-Fixation part; 54-Flexible retain part; 6-Second oscillator; 61-Lug; 7-Spring.

### Preferred Embodiment of the Present Disclosure

The present disclosure provides the linear vibration motor for the hair trimming device, including the mounting frame, the stator for outputting an alternating magnetic field, the first oscillator, the two movers, the mover holder, and the second oscillator. The stator is located in the lower part of the mounting frame, the mover holder is detachably connected to the mounting frame, and the two movers are arranged at the bottom of the mover holder and positioned above the stator. The two movers have opposite magnetic poles. The first oscillator and the second oscillator are both connected to the mover holder, and the spring is provided between the first oscillator and the second oscillator. After the hair trimming device is turned on, the stator outputs an alternating magnetic field, causing the movers to be subjected to a linear reciprocating force under the action of the alternating magnetic field, along with the pulling or supporting action of the mover holder, to generate linear reciprocating motion. Since both the first oscillator and the second oscillator are connected to the mover holder, both the first oscillator and the second oscillator can serve as the motor power output sources. The motor can directly output linear reciprocating driving force, eliminating the mechanism for converting rotational motion into linear motion in the related art, thereby simplifying the structure of the hair trimming device, improving efficiency, and increasing product reliability.

### DETAILED DESCRIPTION

In order to make the objectives, technical solutions, and advantages of the present disclosure clearer, the present disclosure will be further described in detail below with reference to the accompanying drawings and embodiments. The embodiments described herein are merely for explaining the present disclosure and are not intended to limit the present disclosure.

When a component is described as being "mounted at," "fixed to," or "positioned at" another component, it can be directly at the other component or there may be an intermediate component. When a component is described as being "connected to" another component, it can be directly connected to the other component or there may be an intermediate component.

The directional terms such as left, right, up, and down used in the embodiments of the present disclosure are merely relative concepts or refer to the normal operating state of the product, and should not be considered limiting.

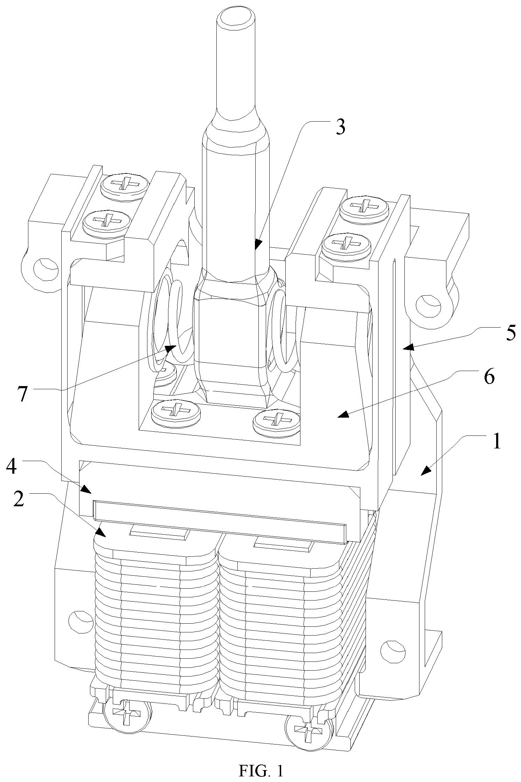

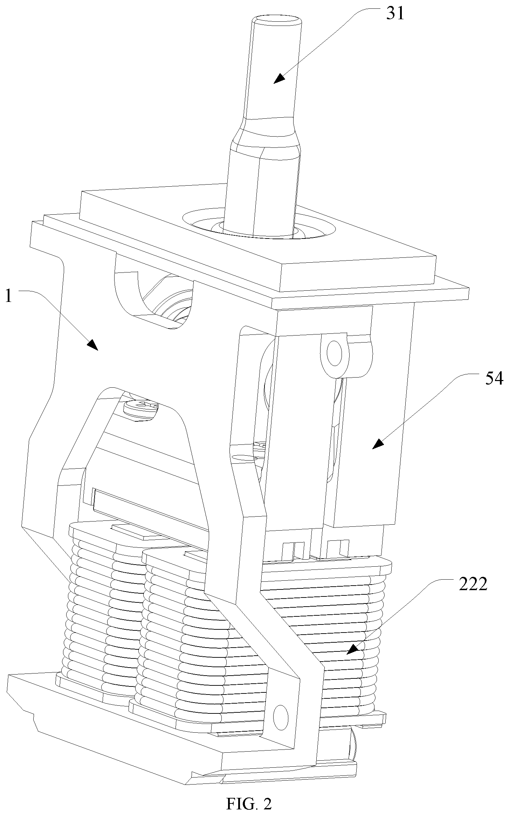

As shown in FIGs. 1-3, the linear vibration motor for the hair trimming device consistent with the present disclosure includes a mounting frame 1, a stator 2 for outputting an alternating magnetic field, a first oscillator 3, two movers 4, a mover holder 5, and a second oscillator 6. The stator 2 is located in the middle or lower part of the mounting frame 1. The mover holder 5 is detachably connected to the mounting frame 1. The movers 4 are located at the bottom of the mover holder 5 and over the stator 2. The two movers 4 can have opposite magnetic poles. The first oscillator 3 and the second oscillator 6 are both connected to the mover holder 5, and a spring 7 is provided between the first oscillator 3 and the second oscillator 6. After the hair trimming device is turned on, the stator 2 outputs an alternating magnetic field, causing the movers 4 to be subjected to a linear reciprocating force under the action of the alternating magnetic field, along with the pulling or supporting action of the mover holder 5, to generate linear reciprocating motion. Since both the first oscillator and the second oscillator 6 are connected to the mover holder 5, both the first oscillator 3 and the second oscillator 6 can serve as the motor power output sources.

Furthermore, the spring 7 provides restoring force and generates resonance for the first oscillator 3 and the second oscillator 6, thereby producing a larger amplitude of oscillation. The motor in the present disclosure can directly output linear reciprocating driving force, eliminating the mechanism for converting rotational motion into linear motion in the related art, thereby simplifying the structure of the hair trimming device, improving efficiency, and increasing product reliability.

Consistent with the present disclosure, the magnetic poles of the two movers 4 are arranged correspondingly opposite to each other, so that the electromagnetic forces are always in opposite directions, and the motion directions of the two movers are also always opposite to each other. As such, the inertial forces of the two movers 4 can be canceled out, and the reaction forces between the stator 2 and the movers 4 can be canceled out, thereby reducing the vibration and noise of the entire motor.

As shown in FIGs. 1 to 3, the stator 2 includes an iron core 21 and a winding assembly 22. The winding assembly 22 includes a coil frame 221 and enameled wire 222 wound on the coil frame 221. The iron core 21 includes two teeth 212, and the winding assembly 22 is sleeved on the tooth 212 of the iron core 21. Specifically, the iron core 21 is U-shaped, and there are two winding assemblies 22, each sleeved on one tooth 212, which can maximize the use of space in the hair trimming device to accommodate more enameled wire 222, thereby increasing the motor output power.

The movers 4 are a first mover 41 and a second mover 42. Each of the first mover 41 and the second mover 42 includes a magnet 411 and a magnetic yoke 412. The magnetic yoke 412 is stacked on the magnet 411. Specifically, one side of the magnet 411 is tightly fixed to the magnetic yoke 412, and the other side of the magnet 411, i.e., the side opposite to the above one side, faces the tooth 212 of the iron core 21. Under the action of the alternating magnetic field of the stator 2, the first mover 41 and the second mover 42 are subjected to a linear reciprocating force (perpendicular to the axis of the tooth 212 of the stator 2), thereby generating linear reciprocating motion in a direction along the axis of the tooth 212. Furthermore, an extension 4121 is provided at the bottom of the magnetic yoke 412 for positioning the magnet 411, preventing the magnet 411 from shifting.

As described above, the magnetic poles of the magnet 411 of the first mover 41 are arranged opposite to the magnetic poles of the magnet 411 of the second mover 42. In this way, the electromagnetic forces acting on the first mover 41 and the second mover 42 are always in opposite directions, and their directions of motion are also always opposite. As a result, the inertial forces of the first mover 41 and the second mover 42 are canceled out, and the reaction forces exerted on the iron core 21 by the first mover 41 and the second mover 42 are canceled out, thereby reducing the vibration and noise during the operation of the entire motor.

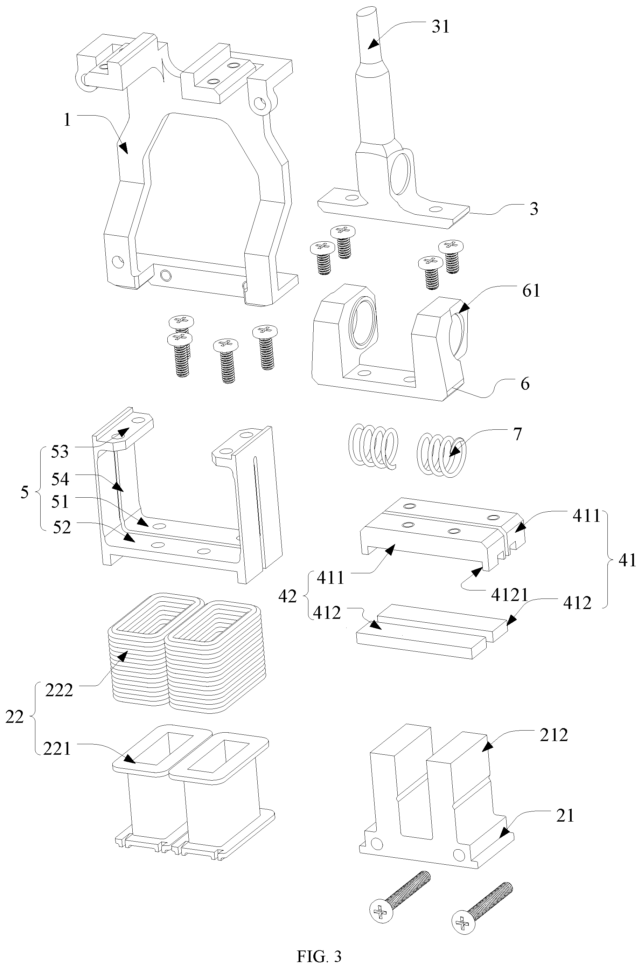

As shown in FIG. 3, the mover holder 5 includes a first mover connector 51, a second mover connector 52, a fixation part 53, and a flexible retain part 54 that are integrally formed. The fixation part 53 is connected to the mounting frame 1, and the first mover connector 51 and the second mover connector 52 are connected to the first mover 41 and the second mover 42, respectively. The first mover connector 51 and the second mover connector 52 are spaced apart from each other, maintaining a certain distance between the two movers and preserving their freedom of movement.

The flexible retain part 54 can be a thin-walled vertical plate, providing sufficient rigidity along the plate (i.e., in the vertical direction) and flexibility perpendicular to the plate. This allows the mover holder 5 to pull or support the mover 4, maintaining a stable gap between the magnet 411 and the tooth 212 of the iron core 21, while also providing the mover 4 with a degree of freedom of movement in the direction perpendicular to the axis of the stator 2 tooth 212, allowing the mover 4 to perform linear reciprocating motion.

Furthermore, the flexible retain part 54 helps to avoid the friction between the mover 4 and other support components during movement, reducing energy loss. Consistent with the present disclosure, the flexible retain part 54 can be in a tensile state, which is more stable than a compressed state, eliminating the risk of buckling of the flexible retain part 54 (vertical plate). Furthermore, the wall thickness of the flexible retain part 54 can be further reduced according to actual needs, reducing the buckling stress of the vertical plate and allowing for a larger oscillation amplitude of the first mover 41 and the second mover 42.

The first oscillator 3 is connected to the first mover 41, and the second oscillator 6 is connected to the second mover 42. As such, the linear reciprocating motion of the first mover 41 and the second mover 42 respectively drives the first oscillator 3 and the second oscillator 6 to perform linear reciprocating motion. The first oscillator 3 and the second oscillator 6 can together serve as the motor power output sources, respectively connected to two different loads (such as two cutter heads) to drive the loads. In some embodiments, the first oscillator 3 can serve as the motor power output source, connected to one load (i.e., a blade can be mounted at the swing arm 31), while the second oscillator 6 acts as a counterweight.

The first oscillator 3 has a swing arm 31 extending from its middle part, and the second oscillator 6 has lugs 61 on two sides. The swing arm 31 is located between the two lugs 61. Both the swing arm 31 and the lugs 61 are provided with spring 7 connectors. The two ends of the spring 7 are respectively connected to the spring 7 connectors, and the two springs 7 are symmetrically arranged. The spring 7 provides restoring force to the first oscillator 3 and the second oscillator 6. By designing the elastic coefficient of the spring 7, the first oscillator 3 and the second oscillator 6 can resonate at their working frequency, thereby generating a larger oscillation amplitude.

Consistent with the present disclosure, the two springs 7 are symmetrically arranged between the first oscillator 3 and the second oscillator 6 to achieve a greater elastic effect. Of course, the number of springs 7 is not limited to two. The number of springs 7 can be increased according to the actual structure and needs, and is not limited here.

Based on the above linear vibration motor, the present disclosure also provides a hair trimming device (not shown), which includes a housing, a control component, a movable blade, and a linear vibration motor. The control component and the linear vibration motor are both located inside the housing. The movable blade is connected to the first oscillator 3 and/or the second oscillator 6 of the linear vibration motor. Through the linear reciprocating motion of the first oscillator 3 and/or the second oscillator 6, the movable blade performs the function of hair trimming. Reference can be made to the above description for the linear vibration motor.

### Industrial practicality

In the hair trimming device and the linear vibration motor for the hair trimming device consistent with the present disclosure, after the linear vibration motor is turned on, the stator outputs an alternating magnetic field, subjecting the mover to a linear reciprocating force, and, through the pulling or support of the mover holder, generating linear reciprocating motion. Since both the first oscillator and the second oscillator are connected to the mover holder, both the first oscillator and the second oscillator can serve as the motor power output sources.

Furthermore, the spring can provide restoring force and generate resonance for the first oscillator and the second oscillator, thereby generating a larger amplitude of oscillation. Moreover, the magnetic poles of the two movers are arranged correspondingly opposite to each other, so that the electromagnetic force is always in the opposite direction, and the direction of motion is also always opposite. The purpose is to cancel out the inertial forces of the two movers, and also to cancel out the reaction forces of the two movers on the stator, thereby reducing the vibration and noise of the entire motor. The motor in the present disclosure can directly output the driving force of linear reciprocating motion, eliminating the mechanism that converts rotational motion into linear motion in the related art, thereby simplifying the structure, improving efficiency, and improving the reliability of the system.

Those skilled in the art can make equivalent substitutions or modifications based on the technical solution and inventive concept of the present disclosure, and all such changes or substitutions should fall within the scope of the present disclosure.

## Claims

1. A linear vibration motor for a hair trimming device comprising:
a mounting frame;
a stator configured to output an alternating magnetic field;
a mover holder detachably connected to the mounting frame;
two movers arranged at a bottom of the mover holder and positioned above the stator, the two movers having opposite magnetic poles;
a first oscillator and a second oscillator both connected to the mover holder; and
a spring provided between the first oscillator and the second oscillator.

2. The linear vibration motor for the hair trimming device according to claim 1, wherein the stator comprises an iron core and a winding assembly, the winding assembly comprises a coil frame and enameled wire, and the enameled wire is wound on the coil frame; the iron core comprises two teeth, and the winding assembly is sleeved on the teeth.

3. The linear vibration motor for the hair trimming device according to claim 1, wherein the movers comprise a first mover and a second mover, each comprising a magnet and a magnetic yoke stacked with the magnet.

4. The linear vibration motor for the hair trimming device according to claim 1, wherein:
the mover holder comprises a first mover connector, a second mover connector, a fixation part, and a flexible retain part that are integrally formed;
the fixation part is connected to the mounting frame; and
the first mover connector and the second mover connector are connected to a first mover and a second mover, respectively.

5. The linear vibration motor for the hair trimming device according to claim 4, wherein the flexible retain part comprises a thin-walled vertical plate.

6. The linear vibration motor for the hair trimming device according to claim 4, wherein the first oscillator is connected to the first mover connector, and the second oscillator is connected to the second mover connector.

7. The linear vibration motor for the hair trimming device according to claim 1, wherein:
the first oscillator comprises a swing arm extending from a middle part of the first oscillator;
the second oscillator comprises two lugs provided at two sides of the second oscillator, respectively, the swing arm being located between the two lugs; and
the spring is one of two springs symmetrically arranged with respect to the swing arm, and each connected between the first swing arm and one of the two lugs.

8. The linear vibration motor for the hair trimming device according to claim 3, wherein the magnet of the first mover and the magnet of the second mover have opposite magnetic poles.

9. The linear vibration motor for the hair trimming device according to claim 2, wherein the iron core is U-shaped, and the winding assembly is one of two winding assemblies each sleeved on one of the two teeth.

10. A hair trimming device comprising:
a housing;
a control component provided within the housing;
the linear vibration motor according to any one of claims 1 to 9 and provided within the housing; and
a movable blade connected to the first oscillator and/or the second oscillator of the linear vibration motor.
